# EUROPEAN PATENT SPECIFICATION

(11) **EP 0 712 895 B1**
(45) Date of publication and mention of the grant of the patent: **28.04.1999**
(21) Application number: 95307901.9
(22) Date of filing: 06.11.1995
(51) Int. Cl.: C08L 25/16, C08L 51/04, C08L 55/02

(54) **Impact modified alpha alkyl substituted vinyl aromatic-vinyl cyanide thermoplastic compositions**
Schlagzähmodifizierte, thermoplastische Zusammensetzungen auf Basis von alpha-alkyl-substituierten aromatischen Vinyl-Vinylcyamid Copolymeren
Compositions thermoplastiques résistantes aux chocs à base de copolymères d'un composé vinylaromatique alpha alcoyl substitué et de cyanure de vinyle

(30) Priority: 21.11.1994 US 342963
(43) Date of publication of application: 22.05.1996
(73) Proprietor: GENERAL ELECTRIC COMPANY, Schenectady, NY 12345 (US)
(72) Inventor: Kuruganti, Vijaya Kumar, Washington, West Virginia 26181 (US); Gaggar, Satish Kumar, Parkersburg, West Virginia 26101 (US); Burger, James Christopher, Parkersburg, West Virginia 26101 (US); Roettger, Louis George, Vienna, West Virginia 22180 (US)
(74) Representative: Szary, Anne Catherine, Dr.

(56) References cited:
- EP-A- 0 488 932

## Description

The present invention relates to alpha alkyl substituted vinyl aromatic-vinyl cyanide thermoplastic compositions, and more particularly relates to impact modified alpha alkyl substituted vinyl aromatic-vinyl cyanide thermoplastic compositions.

### Description of the Related Art

Alpha alkyl substituted vinyl aromatic-vinyl cyanide copolymers such as alpha-methylstyrene-acrylonitrile copolymers are generally known, and typically exhibit elevated heat deflection temperatures and high gloss, but exhibit less than desired levels of impact strength. The addition of a high rubber graft copolymer can increase the impact strength of the composition, but can also undesirably increase the opacity and decrease the gloss of the composition. A high level of opacity requires relatively higher loadings of pigments for a desired level of color intensity.

Consequently, there is a need and desire to provide a high gloss, reduced opacity impact modified alpha- alkyl substituted vinyl aromatic-vinyl cyanide thermoplastic composition.

### Summary of the Invention

A thermoplastic composition is provided consisting of (a) an alpha-alkyl substituted vinyl aromatic-vinyl cyanide copolymer, and (b) an emulsion graft copolymer containing vinyl aromatic-diene rubber superstrate and a vinyl aromatic-vinyl cyanide substrate exhibiting good graft coverage and formed by reacting a vinyl aromatic monomer and a vinyl cyanide monomer in the presence of a redox initiator and a vinyl aromatic diene rubber latex, and (c) a non-graft non(alkyl substituted) styrene-acrylonitrile copolymer. The composition exhibits a high level of gloss and a reduced level of opacity compared to various other impact modified alkyl substituted vinyl aromatic-vinyl cyanide thermoplastic composition. The reduced opacity allows for reduced levels of pigment loadings to achieve a desired level of color intensity. The compositions are useful for making mold parts such as automotive parts such as interior trim.

### Detailed Description of the Invention

The thermoplastic composition consists of: (a) an alpha-alkyl substituted vinyl aromatic-vinyl cyanide copolymer present at a level of from 55 to 80 percent by weight based on the total weight of the composition, preferably from 65 to 75 percent by weight thereof, and more preferably about 70 percent by weight thereof; and (b) an emulsion graft copolymer containing vinyl aromatic-diene rubber substrate and a vinyl aromatic-vinyl cyanide superstrate formed by polymerizing a vinyl aromatic monomer and a vinyl cyanide monomer in the presence of a redox initiator and a vinyl aromatic-diene rubber latex, wherein the emulsion graft copolymer is present at a level of from 5 to 45 percent by weight based on the total weight of the composition, more preferably from 20 to 35 percent by weight thereof, and most preferably about 25 to 30 percent by weight thereof; and a non-graft non(alkyl substituted) styrene-acrylonitrile copolymer present at a level of from 5 to 20 percent by weight based on the total weight of the composition, more preferably from 5 to 10 percent by weight thereof.

The alpha-alkyl substituted vinyl aromatic-vinyl cyanide copolymer comprises (in reacted form as is well understood) the vinyl aromatic monomer at a level of from 50 to 90 percent by weight based on the total weight of the copolymer, preferably from 60 to 80 percent by weight thereof, more preferably from 65 to 75 percent by weight thereof, and most preferably about 70 percent by weight thereof. The vinyl cyanide monomer is present at a level of from 10 to 50 percent by weight based on the total weight of the copolymer, preferably from 20 to 40 percent by weight thereof, more preferably from 25 to 35 percent by weight thereof, and most preferably about 30 percent by weight thereof. The copolymers may also contain 20 percent or less of an additional monomer such as non-substituted styrene, and is preferably free of such additional monomers, and is preferably free of acrylate monomers such as alkyl acrylate monomers such as methylmethacrylate.

The alpha-alkyl vinyl aromatic monomer is preferably an alpha C₁-C₄ alkyl vinyl aromatic monomer, and is more preferably an alpha-methyl vinyl aromatic monomer, and is most preferably alpha-methylstyrene.

The emulsion polymerized graft copolymer is critical to the present invention in obtaining the desired property profile and comprises (i) a vinyl aromatic-diene rubber substrate present at a level of from 40 to 75 percent by weight based on the total weight of the emulsion polymerized graft copolymer, more preferably from 45 to 65 percent by weight thereof, and most preferably from 50 to 60 percent by weight thereof, wherein the substrate has a weight average particle size of between 0.21 µm (microns) and 0.40 µm (microns), more preferably from 0.25 µm (microns) and 0.35 µm (microns), and most preferably from 0.27 µm (microns) and 0.30 µm (microns), and (ii) a vinyl aromatic-vinyl cyanide superstrate present at a level of from 25 to 60 percent by weight based on the total weight of the emulsion polymerized graft copolymer, more preferably from 35 to 55 percent by weight thereof, and most preferably from 40 to 50 percent by weight thereof.

The vinyl aromatic-diene rubber substrate of the emulsion polymerized graft copolymer preferably comprises the vinyl aromatic at a level of from 5 to 25 percent by weight based on the total weight of the substrate, more preferably from 10 to 20 percent by weight thereof, and most preferably from 12 to 17 percent by weight thereof, and preferably comprises the diene at a level of from 75 to 95 percent by weight based on the total weight of the substrate, more preferably from 80 to 90 percent by weight thereof, and most preferably from 83 to 88 percent by weight thereof.

The superstrate of the emulsion polymerized graft copolymer is formed by reacting the vinyl aromatic monomer and vinyl cyanide monomer in the presence of a redox (oxidation-reduction) initiator and the vinyl aromatic-diene rubber substrate in latex form. The superstrate preferably has the vinyl cyanide monomer at a level of from 20 to 40 percent by weight, and preferably has the vinyl aromatic monomer at a level of from 60 to 80 percent by weight based on the total weight of the superstrate.

Suitable redox initiators include di-tert-butyl peroxide, benzoyl peroxide, lauroyl peroxide, oleyl peroxide, toluyl peroxide, di-tert-butyl diperphthalate, tert-butyl peracetate, tert-butyl perbenzoate, dicumyl peroxide, tert-butyl peroxide, isopropyl carbonate, 2,5-dimethyl-2,5-dimethyl-2,5-di(tert-butylperoxy)hexane, 2,5-dimethyl-2,5-di(tert-butylperoxy) hexane-3 or hexyne-3, tert-butyl hydroperoxide, cumene hydroperoxide, p-menthane hydroperoxide, cyclopentane hydroperoxide, pinane hydroperoxide, 2,5-dimethylhexane-2,5-dihydroperoxide and mixtures thereof. The redox initiator results in good graft coverage, thereby preventing rubber agglomeration during melt mixing.

The thermoplastic composition also contains a non-graft non-alkyl substituted styrene-acrylonitrile copolymer. Preferably the copolymer is mass polymerized copolymer having a non-alkyl substituted styrene level of from 60 to 80 percent by weight based on the total weight of the copolymer, more preferably from 60 to 75 percent by weight, and an acrylonitrile level of from 20 to 40 percent by weight, preferably from 25 to 40 percent by weight thereof. The opacity of the composition can be substantially enhanced (substantially reduced) by utilizing a high acrylonitrile, 35 to 40 percent by weight acrylonitrile in the non-alkyl substituted styrene acrylonitrile copolymers. The styrene-acrylonitrile copolymers are preferably at a level of from 0 to 30 percent by weight of the composition, preferably from 5 to 20 percent by weight thereof, and most preferably from 5 to 10 percent by weight thereof.

The styrene-acrylonitrile copolymer preferably has a weight average molecular weight of from 60,000 g/mole to 150,000 g/mole, more preferably from 100,000 to 125,000 g/mole, and preferably has a weight average molecular weight of from 25,000 to 60,000, and more preferably from 30,000 to 50,000.

The vinyl aromatic monomers which may be employed for the emulsion polymerized graft copolymer include styrene, alpha-methyl styrene, halostyrenes i.e. dibromostyrene, mono or di alkyl, alkoxy or hydroxy substitute groups on the nuclear ring of the vinyl aromatic monomer i.e. vinyl toluene, vinylxylene, butylstyrene, para-hydroxystyrene or methoxystyrene or mixtures thereof. The vinyl aromatic monomers utilized are generically described by the following formula: 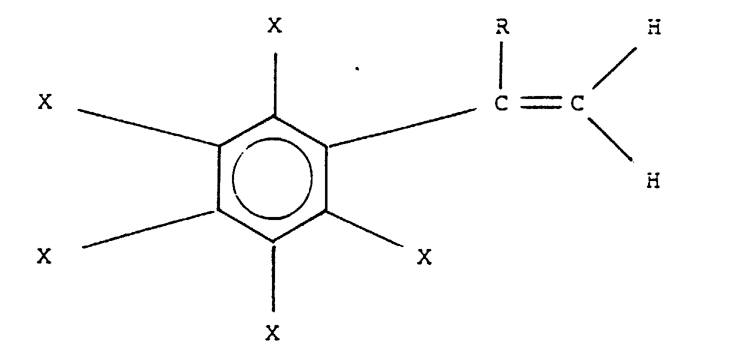 wherein X is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred vinyl aromatic monomers used are styrene and/or α-methylstyrene.

Suitable vinyl cyanide monomers include acrylonitrile and substituted vinyl cyanides such as methacrylonitrile. The acrylonitrile and substituted acrylonitrile are described generically by the following formula: 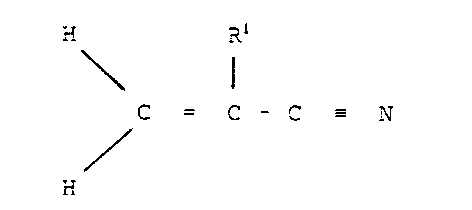 wherein R¹ may be selected from the same group set out for R as previously defined. Examples of such monomers include acrylonitrile, ethacrylonitrile, methacrylonitrile, a-chloroacrylonitrile, and α-bromoacrylonitrile.

Specific conjugated diene monomers normally utilized in preparing the rubber substrate of the graft polymer are generically described by the following formula: 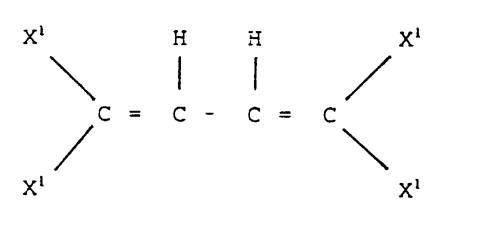 wherein X¹ is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

Preferred graft superstrates include copolymers of styrene and acrylonitrile, copolymers of α-methylstyrene and acrylonitrile or copolymers with up to 50% by weight of C₁-C₆ alkylacrylates, acrylonitrile or styrene. Specific examples of monovinylidene aromatic graft copolymers include but are not limited to the following: acrylonitrile-butadiene-styrene (ABS), and methylmethacrylate-acrylonitrile-butadiene-styrene (MABS). Preferably the superstrate is free of alkylacrylates such as methylmethacrylates.

The thermoplastic compositions are useful for making high heat molded articles such as automotive parts such as interior parts, and preferably contain from.0.05 to 10 percent by weight pigments, more preferably from 0.1 to 5 percent by weight pigments, such as organic pigments, based on the total weight of the composition. The reduced opacity of the present compositions allows for the ability of reduced levels of pigment loading to achieve the desired level of color intensity thereby reducing the potential expense of higher pigment loadings.

The compositions according to the present invention preferably have an opacity of not greater than 79% for 3.18 mm (1/8 inch) thickness and a 60° surface gloss of at least 90% as measured by ASTM D523.

### EXAMPLES

The ABS polyblends of the present examples comprise a matrix copolymer of alpha-methylstyrene and acrylonitrile blended with an emulsion polymerized acrylonitrile-butadiene-styrene graft copolymer containing high rubber content (HRG) and a mass polymerized, styrene-acrylonitrile copolymer. The polyblends were melt mixed in a 30 mm twin screw extruder at a temperature sufficient to melt all the components and in the proportions described in Table 1. The resulting pellets were injection molded into test specimens at a stock temp. of 246°C and mold temp. of 66°C. Viscosities of pellets were measured by Capillary rheometer at 260°C (500°F) according to ASTM D3835. Notched izod testing was carried out according to ASTM D256. Dart impact testing was done according to ASTM D3039. Heat deflection temperature (HDT) was measured according to ASTM D648-82. The surface gloss was measured by Gardner gloss meter according to ASTM D523. Opacity of the blends is measured on a 25D Hunter Colorimeter and expressed as percent. Yellowness Index was measured on a 25D Hunter Colorimeter according to ASTM E313.

Emulsion HRG-1 is produced by carrying out graft polymerization on small particles (Mean particle size of 0.085 microns) of butadiene-styrene (85/15) with styrene and acrylonitrile using a thermal vazo initiator. The small rubber particles in HRG-1 aggregate during melt mixing and molding of ABS polyblend.

Emulsion HRG-2 is produced by grafting on to latex agglomerated particles (Mean particle size of 0.28 microns) of butadiene-styrene rubber (85/15) with styrene and acrylonitrile monomers using a redox initiator system. Latex agglomeration of small (Mean particle size of 0.085 microns) styrene-butadiene (15/85) rubber particles was carried out by Mechanical agglomeration process in order to obtain latex agglomerated particles (mean particle size of 0.28 micron). Said redox initiated free radical graft polymerization results in a good graft coverage around the rubber particles in the HRG. Such a good graft coverage results in good dispersion of rubber particles and improves the surface gloss of molded parts.

Emulsion HRG-3 is produced by grafting on to a latex agglomerated particles of butadiene rubber (Mean particle size of 0.29 microns) with styrene and acrylonitrile monomers using redox initiator system. Latex agglomeration of small (Mean particle size of 0.075 microns) butadiene rubber latex particles was carried by mechanical agglomeration process in order to obtain latex agglomerated particles (mean particle size of 0.29 microns). Said redox initiated free radical graft polymerization imparts good graft coverage around the rubber particles in the HRG. Such a good graft coverage promotes good dispersion of rubber particles and improves surface gloss of molded parts. All HRG's (HRG-1, HRG-2 and HRG-3) contain about 50% rubber.

SAN is a copolymer of styrene-acrylonitrile (72/28 by weight) produced in mass polymerization.

AMSAN is a copolymer of alpha-methylstyrene and acrylonitrile (70/30) and commercially available from BASF.

EBS Wax (N,N'-ethylene bis(stearamide)) is a commercially available lubricant and present in examples A, 1 and B at a level of 1 percent by weight.

Pluronic F-88 is a commercially available block copolymer of ethylene oxide and propylene oxide and typically used as a release agent and is present in examples A, 1 and B at a level of 0.25 percent by weight.

**TABLE 1**

| | A | 1 | B |
|---|---|---|---|
| AMSAN | 70 | 70 | 70 |
| SAN | 6 | 6 | 6 |
| HRG-1 | 24 | - | - |
| HRG-2 | | 24 | - |
| HRG-3 | - | - | 24 |
| Capillary Viscosity 260°C (poise) 1000/sec Shear | 2015 | 1877 | 2075 |
| 3.18 mm (1/8") N.I. Impact RT (ft-lb/in) J/m | (1.9) 101.3 | (1.6) 85.3 | (1.9) 101.3 |
| Dart Impact RT (ft-lb) Nm | (21) 28.5 | (10) 13.6 | (14) 19.0 |
| Std. Dev. | 11 | 6 | 5 |
| HDT 6.35 mm (1/4"), IMU (264 psi) 1822 kPa (°C) | 98 | 98 | 99 |
| 60° Gloss | 71 | 96 | 96 |
| 3.18 mm (1/8") Opacity (%) | 78 | 79 | 84 |
| Yellowness Index | 37 | 38 | 38 |

Formulation -A exhibits poor surface gloss. However, Formulation -1 results in significantly lower opacity values for the polyblend compared to formulation -B. Formulation -1 is new and novel composition which will be useful in coloring the polyblend at a reduced pigment loadings in molded parts for several applications (e.g. automotive parts).

## Claims

1. A thermoplastic composition consisting of:
(a) an alpha-alkyl substituted vinyl aromatic-vinyl cyanide copolymer present at a level of from 55 to 80 percent by weight based on the total weight of the composition, said alpha-alkyl substituted vinyl aromatic-vinyl cyanide copolymer comprising alpha-alkyl substituted vinyl aromatic at a level of from 50 to 90 percent by weight based on the total weight of the copolymer ;
(b) an emulsion polymerized graft copolymer comprising
(i) a vinyl aromatic-diene rubber substrate present at a level of from 40 to 75 percent by weight based on the total weight of the emulsion polymerized graft copolymer, said substrate having a weight average particle size of between 0.21 µm (microns) and 0.40 µm (microns);
(ii) a vinyl aromatic-vinyl cyanide superstrate present at a level of from 25 to 60 percent by weight based on the total weight of the emulsion polymerized graft copolymer, said superstrate being formed by reacting a vinyl aromatic monomer and a vinyl cyanide monomer in the presence of a redox initiator and said vinyl aromatic-diene rubber substrate, said emulsion graft copolymer being present at a level of from 5 to 45 percent by weight based on the total weight of the composition; and
(c) from 5 to 20 percent by weight of a non-graft non (alkyl substituted) styrene-acrylonitrile copolymer.

2. The composition of Claim 1 wherein said composition has an opacity of not greater than 79 percent for 3.18 mm (1/8 inch) thickness.

3. The composition of Claim 1 wherein said composition has a 60° surface gloss of at least 95 percent as measured by ASTM D523.

4. The composition of Claim 1 wherein said alpha-alkyl substituted vinyl aromatic-vinyl cyanide copolymer is an alpha-methylstyrene-acrylonitrile copolymer.

5. The composition of Claim 4 wherein the alphamethylstyrene-acrylonitrile copolymer comprises alpha-methylstyrene at a level of from 60 to 80 percent by weight based on the total weight of the alpha-methylstyrene-acrylonitrile copolymer.

6. The composition of Claim 1 wherein said alpha-alkyl substituted vinyl aromatic-vinyl cyanide copolymer is present at a level of from 65 to 75 percent by weight based on the total weight of the composition.

7. The composition of Claim 1 wherein said alpha-alkyl substituted vinyl aromatic-vinyl cyanide copolymer is present at a level of about 70 percent by weight based on the total weight of the composition.

8. The composition of Claim 6 wherein said emulsion graft copolymer is present at a level of from 20 to 35 percent by weight based on the total weight of the composition.

9. The composition of Claim 1 wherein said non-substituted styrene-acrylonitrile copolymer has a weight average molecular weight of between 60,000 and 150,000 grams per mole.

## Patentansprüche

1. Thermoplastische Zusammensetzung, bestehend aus:
(a) einem α-alkyl-substituierten aromatischen Vinyl-Vinylcyanid-Copolymer in einer Menge von 55 bis 80 Gew.-%, bezogen auf das Gesamtgewicht der Zusammensetzung, wobei das α-alkyl-substituierte aromatische Vinyl-Vinylcyanid-Copolymer α-alkyl-substituierte aromatische Vinylverbindung in einer Menge von 50 bis 90 Gew.-%, bezogen auf das Gesamtgewicht des Copolymers, umfaßt,
(b) einem emulsions-polymerisierten Pfropfcopolymer, umfassend:
(i) ein aromatisches Vinyl-Dienkautschuk-Substrat in einer Menge von 40 bis 75 Gew.-%, bezogen auf das Gesamtgewicht des emulsions-polymerisierten Pfropfcopolymers, wobei das Substrat ein Gewichtsmittel der Teilchengröße von 0,21 pm bis 0,40 µm aufweist,
(ii) ein darüberliegendes aromatisches Vinyl-Vinylcyanid-Substrat in einer Menge von 25 bis 60 Gew.-%, bezogen auf das Gesamtgewicht des emulsions-polymerisierten Pfropfpcopolymers, wobei das darüberliegende Substrat gebildet ist durch Umsetzen eines aromatischen Vinyl-Monomers und eines Vinylcyanid-Monomers in Gegenwart eines Redox-Initiators und des aromatischen Vinyl-Dientkautschuk-Substrates, wobei das Emulsions-Pfropfcopolymer in einer Menge von 5 bis 45 Gew.-%, bezogen auf das Gesamtgewicht der Zusammensetzung, vorhanden ist, und
(c) von 5 bis 20 Gew.-% eines nicht gepfropften, nicht alkyl-substituierten Styrol-Acrylnitril-Copolymers.

2. Zusammensetzung nach Anspruch 1, worin die Zusammensetzung eine Opazität von nicht mehr als 79% für 3,18 mm (1/8 Zoll) Dicke hat.

3. Zusammensetzung nach Anspruch 1, worin die Zusammensetzung einen 60°-Oberflächenglanz von mindestens 95% aufweist, gemessen nach ASTM D523.

4. Zusammensetzung nach Anspruch 1, worin das α-alkyl-substituierte aromatische Vinyl-Vinylcyanid-Copolymer ein α-Methylstyrol-Acrylnitril-Copolymer ist.

5. Zusammensetzung nach Anspruch 4, worin das α-Methylstyrol-Acrylnitril-Copolymer α-Methylstyrol in einer Menge von 60 bis 80 Gew.-%, bezogen auf das Gesamtgewicht des α-Methylstyrol-Acrylnitril-Copolymers, aufweist.

6. Zusammensetzung nach Anspruch 1, worin das α-alkyl-substituierte aromatische Vinyl-Vinylcyanid-Copolymer in einer Menge von 65 bis 75 Gew.-%, bezogen auf das Gesamtgewicht der Zusammensetzung, vorhanden ist.

7. Zusammensetzung nach Anspruch 1, worin das α-alkyl-substituierte aromatische Vinyl-Vinylcyanid-Copolymer in einer Menge von etwa 70 Gew.-%, bezogen auf das Gesamtgewicht der Zusammensetzung, vorhanden ist.

8. Zusammensetzung nach Anspruch 6, worin das Emulsions-Pfropfcopolymer in einer Menge von 20 bis 356 Gew.-%, bezogen auf das Gesamtgewicht der Zusammensetzung, vorhanden ist.

9. Zusammensetzung nach Anspruch 1, worin das Copolymer aus unsubstituiertem Styrol und Acrylnitril ein Gewichtsmittel des Molekulargewichtes zwischen 60.000 und 150.000 g/mol aufweist.

## Revendications

1. Composition thermoplastique comprenant :
(a) un copolymère d'un monomère aromatique vinylique alkylé en α et d'un cyanure de vinyle, présent en une quantité allant de 55 à 80 % en poids par rapport au poids total de la composition, ledit copolymère d'un monomère aromatique vinylique alkylé en α et d'un cyanure de vinyle comprenant le monomère aromatique vinylique alkylé en α en une quantité allant de 50 à 90 % en poids par rapport au poids total du copolymère;
(b) un copolymère de greffage polymérisé en émulsion comprenant :
(i) un substrat en caoutchouc monomère aromatique vinylique/diène, présent en une quantité allant de 40 à 75 % en poids par rapport au poids total du copolymère de greffage polymérisé en émulsion, ledit substrat présentant une valeur moyenne pondérée de la taille des particules allant de 0,21 µm à 0,40 µm ;
(ii) une couche supérieure de monomère aromatique vinylique/cyanure de vinyle, présente en une quantité allant de 25 à 60 % en poids par rapport au poids total du copolymère de greffage polymérisé en émulsion, ladite couche supérieure étant formée en faisant réagir un monomère aromatique vinylique et un cyanure de vinyle monomère en présence d'un amorceur d'oxydo-réduction et dudit substrat en caoutchouc monomère aromatique vinylique/diène,
ledit copolymère de greffage polymérisé en émulsion étant présent en une quantité allant de 5 à 45 % en poids par rapport au poids total de la composition ; et
(c) de 5 à 20 % en poids d'un copolymère styrène non alkylé/acrylonitrile n'ayant pas subi de greffage.

2. Composition selon la revendication 1, dans laquelle ladite composition présente une opacité ne dépassant pas 79 % pour une épaisseur de 3,18 mm (1/8 pouce).

3. Composition selon la revendication 1, dans laquelle ladite composition présente un brillant superficiel à 60° d'au moins 95 %, tel que mesuré selon la norme ASTM D523.

4. Composition selon la revendication 1, dans laquelle ledit copolymère d'un monomère aromatique vinylique alkylé en α et d'un cyanure de vinyle est un copolymère alpha-méthylstyrène/acrylonitrile.

5. Composition selon la revendication 4, dans laquelle le copolymère alpha-méthylstyrène/acrylonitrile comprend l'alpha-méthylstyrène en une quantité allant de 60 à 80 % en poids par rapport au poids total du copolymère alpha-méthylstyrène/acrylonitrile.

6. Composition selon la revendication 1, dans laquelle ledit copolymère d'un monomère aromatique vinylique alkylé en α et d'un cyanure de vinyle est présent en une quantité allant de 65 à 75 % en poids par rapport au poids total de la composition.

7. Composition selon la revendication 1, dans laquelle ledit copolymère d'un monomère aromatique vinylique alkylé en α et d'un cyanure de vinyle est présent en une quantité d'environ 70 % en poids par rapport au poids total de la composition.

8. Composition selon la revendication 6, dans laquelle ledit copolymère de greffage polymérisé en émulsion est présent en une quantité allant de 20 à 3 5 % en poids par rapport au poids total de la composition.

9. Composition selon la revendication 1, dans laquelle ledit copolymère de styrène non substitué et d'acrylonitrile présente une masse moléculaire moyenne en poids allant de 60 000 à 150 000 grammes par mole.
